# EUROPEAN PATENT SPECIFICATION

(11) **EP 4 638 091 B1**
(45) Date of publication and mention of the grant of the patent: **04.11.2026**
(21) Application number: 23818486.5
(22) Date of filing: 06.12.2023
(51) Int. Cl.: B29C 49/54, B65B 3/02, B65D 1/44, B29C 51/08, B29C 51/34, B29D 16/00, B29C 45/37, B29C 49/06, B29L 31/00

(54) **METHOD AND APPARATUS FOR THE PRODUCTION OF PLASTIC CONTAINERS**
VERFAHREN UND VORRICHTUNG ZUR HERSTELLUNG VON KUNSTSTOFFBEHÄLTERN
PROCÉDÉ ET APPAREIL DE PRODUCTION DE RÉCIPIENTS EN PLASTIQUE

(30) Priority: 21.12.2022 IT 202200026220
(43) Date of publication of application: 29.10.2025
(73) Proprietor: Sacmi Imola S.C., 40026 Imola (IT)
(72) Inventor: DI GIACOMO, Alberto, 40026 IMOLA (IT); PUCCI, Fabrizio, 40023 CASTEL GUELFO DI BOLOGNA (IT); PARRINELLO, Fiorenzo, 40059 MEDICINA (IT); CORRADI, Marco, 40026 IMOLA (IT)
(74) Representative: Modiano, Micaela Nadia
(86) International application number: PCT/EP2023/084569
(87) International publication number: WO 2024/132537

(56) References cited:
- FR-A1- 2 236 634
- US-B1- 6 866 905

## Description

The present invention relates to a method and an apparatus for the production of plastic containers. The present invention also relates to a container made by means of a method according to one or more of claims 1 to 6.

The prior art document FR 2 236 634 A1 discloses a method for the production of containers comprising a step of molding a substantially cylindrical preform comprising a mouth and a preform body comprising a side wall and a bottom by means of a mold comprising a female mold part and a male mold part, and a step of blow-molding said preform to provide a container.

A rather common problem in apparatuses for the production and storage of plastic containers, typically shaped like a vase or cup, is related to the difficulty of properly stacking and/or unstacking the containers produced due to friction between respective portions of the internal surface of the container arranged below and the external surface of the container that is fed from above to be stacked and lifted to be unstacked.

In order to try to obviate this drawback, an attempt has been made to increase the release precision of the containers and to act to generically try to reduce the friction between the internal and external surfaces of the containers to be stacked.

The aim of the present invention is to provide a method and an apparatus for the production of plastic containers that is capable of improving the background art in one or more of the above aspects.

Within this aim, an object of the invention is to provide a method and an apparatus for the production of plastic containers that significantly reduces the risk of jamming during the stacking and/or unstacking of the containers produced.

A further object of the present invention is to devise a method and an apparatus for the production of plastic containers that allows to increase the productivity of the apparatus.

Not least object of the invention is to provide a method and an apparatus for the production of plastic containers that is highly reliable, relatively easy to provide, and at competitive costs.

This aim, as well as these and other objects that will become better apparent hereinafter, are achieved by a method and an apparatus for the production of plastic containers according to claim 1, optionally provided with one or more of the characteristics of the dependent claims.

Further characteristics and advantages of the invention will become better apparent from the description of some preferred, but not exclusive, embodiments of the method and the apparatus for the production of plastic containers according to the invention, illustrated by way of non-limiting example in the accompanying drawings, wherein:
Figure 1 is a lateral elevation view of a preform obtained by means of the molding step of the method according to the invention;
Figure 2 is a lateral elevation view of a container obtained by means of the preform blow-molding step;
Figure 3 is a lateral elevation view of mutually stacked containers.

With reference to the cited figures, the present invention relates to a method for the production of containers 20 and specifically plastic containers.

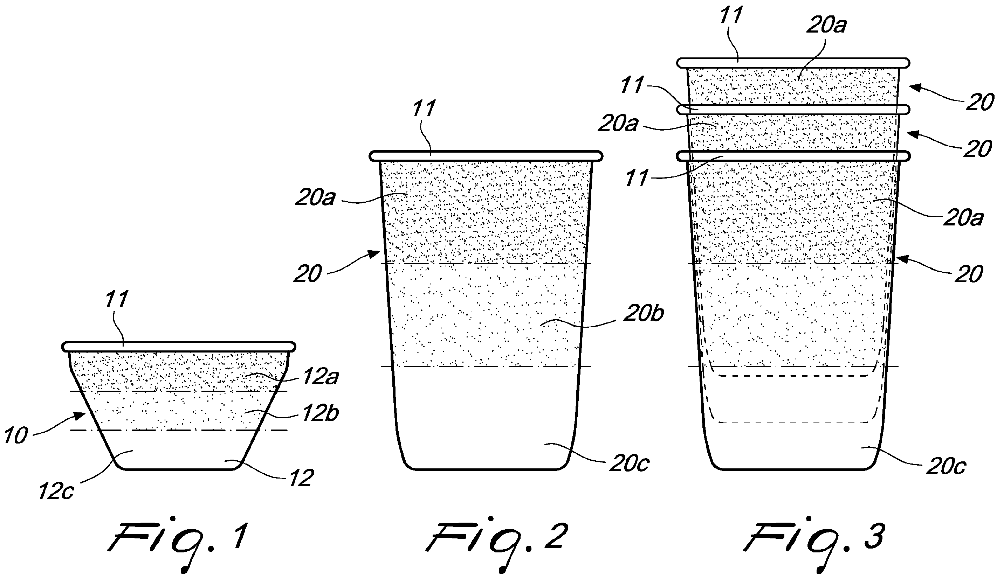

The containers 20 advantageously have a cup- or tumbler-like shape so that they can be mutually stacked (as shown in Figure 3).

The method according to the invention comprises a step of molding a substantially cylindrical preform 10 which comprises a mouth 11 and a preform body 12.

The preform body 12 comprises a side wall and a bottom.

The molding step comprises, for example, molding by injection or compression or by compression-injection.

The molding step is performed by means of a mold comprising a female mold part and a male mold part.

After the molding step, the method provides for a step of blow-molding the preform 10 to provide a container 20.

According to the present invention, the male mold part has at least one corrugated portion designed to provide the internal surface 12a of the preform body 12 arranged proximate to the mouth 11.

The corrugated portion is, in particular, designed to provide a first internal surface 12a of the preform body 12 that is at least equal to 30% of the surface of the side wall of said preform body 12.

The preform 12 forms at least one second internal surface 12b extending from the opposite side of the first internal surface 12a with respect to the mouth 11.

Conveniently, the preform 12 also forms a third internal surface 12c extending from the opposite side of the second internal surface 12b with respect to the first internal surface 12a.

In practice, as shown in Figure 1, the first internal surface 12a is extended proximate to the mouth 11 of the preform 10, the third internal surface 12c is extended proximate to the bottom of preform 10, and the second internal surface 12b is extended in an intermediate position between the first internal surface 12a and the third internal surface 12c.

The first internal surface 12a has an Rmc [%] comprised between 1% and 12%.

The blow-molding step is, in turn, adapted to provide a container 20 having the respective first internal region 20a provided starting from the first internal surface 12a of the preform body 12 having an Rmc [%] comprised between 3% and 30%.

Rmc [%] is understood to refer to the percentage of load-bearing surface.

Its definition and calculation method is given in the ISO 21920-2:2021 standard and has substantially replaced what was referenced as Rmr in the previous, now withdrawn, UNI EN ISO 4287:2002 standard.

The parameter Rmc can also be defined as the length of the resting contact surface expressed as a percentage of the assessment length, at a depth "c" below the highest peak.

It is also possible to derive Rmc as the length of the resting contact surface expressed as a percentage of the assessment length, at a height "c" above the midplane.

Advantageously, the first internal surface 12a has an Rmc [%] (measured at a distance "c" above the midplane) comprised between 1% and 10%, and more preferably comprised between 3% and 7%.

In the latter case, the blow-molding step is adapted to provide a container 20 having the respective internal region 20a that is provided starting from the first internal surface 12a of the preform body 12 having an Rmc [%] comprised between 4% and 28%.

Conveniently, the corrugated portion is designed to provide a first internal surface 12a of the preform body 12 that is at least equal to 50% of the side wall surface of the preform body 12.

The corrugated portion is obtained by sandblasting the male mold part.

Of course, there is nothing to prevent obtaining the corrugated portion of the male mold part by means of other abrasion techniques, even of the chemical type.

The method according to the invention provides, after the blow-molding step, a step of stacking the containers 20 inside each other, oriented with their respective mouths 11 directed upward.

According to a further aspect, the present invention relates to an apparatus for producing containers 20 which comprises a mold for molding a substantially cylindrical preform 10 comprising a mouth 11 and a preform body 12 comprising a side wall and a bottom.

The mold comprises a female mold part and a male mold part.

The apparatus furthermore comprises a device for blow-molding preform 10 in order to provide a container 20.

In particular, the male mold part has at least one corrugated portion designed to provide the internal surface 12a of the preform body 12 arranged proximate to the mouth 11.

The corrugated portion is designed to provide a first internal surface 12a of the preform body 12 at least equal to 30% of the surface of the side wall of the preform body 12.

The first internal surface 12a has an Rmc [%] comprised between 1% and 12%.

The blow-molding step is also adapted to provide a container 20 having the respective internal region 20a provided starting from the first internal surface 12a of the preform body 12 having an Rmc [%] comprised between 3% and 30%.

Conveniently, the corrugated portion is designed to provide a first internal surface 12a of the preform body 12 that is at least equal to 50% of the surface of the side wall of the preform body 12.

The corrugated portion is obtained by sandblasting the male mold part.

According to a further aspect, the present invention relates to a container 20 characterized in that it is obtainable by means of a method according to the above description.

To complete the data provided in the description, the data on the corrugations of the preform 12 and the container 20 in the various regions of two different samples are provided hereinafter.

| Sample 1 | Rmc [%] calculated with "c" above the midplane |
|---|---|
| Preform region 12a | 6% average value |
| | 1.2% - 11% range |
| Container region 20a | 15% average value |
| | 4% - 30% range |
| Container region 20b | 16% average value |
| | 2.5% - 30% range |
| Container region 20c | 17% average value |
| | 5% - 27% range |

| Sample 2 | Rmc [%] calculated with "c" above the midplane |
|---|---|
| Preform region 12a | 7.6% average value |
| | 4% - 12% range |
| Container region 20a | 30% average value |
| | 22% - 40% range |
| Container region 20b | 16.7% average value |
| | 9% - 27% range |
| Container region 20c | 12.7% average value |
| | 4% - 20% range |

In practice it has been found that the invention achieves the intended aim and objects, providing a method and an apparatus for the production of containers in which the risks of incorrect stacking and/or unstacking are extremely reduced, with no discernible increase in apparatus costs or reduction in production speed.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for the production of containers (20) comprising a step of molding a substantially cylindrical preform (10) comprising a mouth (11) and a preform body (12) comprising a side wall and a bottom by means of a mold comprising a female mold part and a male mold part, and a step of blow-molding said preform (10) to provide a container (20), **characterised in that** said male mold part is provided with at least one corrugated portion designed to provide the internal surface (12a) of the preform body (12) arranged proximate to the mouth (11), said corrugated portion being designed to provide a first internal surface (12a) of the preform body (12) that is at least equal to 30% of a surface of a side wall of said preform body (12), said first internal surface (12a) having an Rmc [%] comprised between 1% and 12%, said blow-molding step being adapted to provide a container (20) having a respective internal region (20a) provided starting from said first internal surface (12a) of said preform body (12) having an Rmc [%] comprised between 3% and 30%.

2. The method according to claim 1, **characterized in that** said first internal surface (12a) has an Rmc [%] comprised between 1% and 10%, said blow-molding step being adapted to provide a container (20) having the respective internal region (20a) provided starting from said first internal surface (12a) of said preform body (12) having an Rmc [%] comprised between 4% and 28%.

3. The method according to one or more of the preceding claims, **characterized in that** said Rmc [%] is calculated as defined in the ISO 21920-2:2021 standard.

4. The method according to one or more of the preceding claims, **characterized in that** said corrugated portion is designed to provide a first internal surface (12a) of the preform body (12) at least equal to 50% of the surface of the side wall of said preform body (12).

5. The method according to one or more of the preceding claims, **characterized in that** said corrugated portion is obtained by sandblasting said male mold part.

6. The method according to one or more of the preceding claims, **characterized in that** it comprises a step of stacking said containers (20) inside each other, oriented with their respective mouths (11) directed upward.

7. An apparatus for producing containers (20), comprising a mold for molding a substantially cylindrical preform (10) comprising a mouth (11) and a preform body (12) comprising a side wall and a bottom, said mold comprising a female mold part and a male mold part, and a device for blow-molding said preform (10) to provide a container (20), **characterized in that** said male mold part is provided with at least one corrugated portion designed to provide the internal surface (12a) of the preform body (12) arranged proximate to the mouth (11), said corrugated portion being designed to provide a first internal surface (12a) of the preform body (12) that is at least equal to 30% of the surface of the side wall of said preform body (12), said first internal surface (12a) having an Rmc [%] comprised between 1% and 12%, said blow-molding step being adapted to provide a container (20) having the respective internal region (20a) provided starting from said first internal surface (12a) of said preform body (12) having an Rmc [%] comprised between 3% and 30%.

8. The apparatus for producing containers (20) according to claim 7, **characterized in that** said corrugated portion is designed to provide a first internal surface (12a) of the preform body (12) that is at least equal to 50% of the surface of the side wall of said preform body (12).

9. The apparatus for producing containers (20) according to one or more of claims 7 to 8, **characterized in that** said corrugated portion is obtained by sandblasting said male mold part.

10. A container (20), **characterized in that** it is made by means of a method according to one or more of claims 1 to 6.

## Patentansprüche

1. Ein Verfahren zur Herstellung von Behältern (20), das Folgendes umfasst: einen Schritt des Formens eines im Wesentlichen zylindrischen Vorformlings (10), der eine Öffnung (11) und einen Vorformlingskörper (12) umfasst, welcher eine Seitenwand und einen Boden umfasst, mit Hilfe einer Form, die einen Matrizenteil und einen Patrizenteil umfasst, und einen Schritt des Blasformens des Vorformlings (10), um einen Behälter (20) herzustellen; **dadurch gekennzeichnet, dass** der Patrizenteil mit mindestens einem gewellten Abschnitt ausgestattet ist, der dazu dient, die innere Oberfläche (12a) des Vorformlingskörpers (12) bereitzustellen, angeordnet in der Nähe der Öffnung (11); wobei der gewellte Abschnitt konstruiert ist, um eine erste innere Oberfläche (12a) des Vorformlingskörpers (12) bereitzustellen, die mindestens gleich 30% einer Oberfläche einer Seitenwand des Vorformlingskörpers (12) beträgt; wobei die erste innere Oberfläche (12a) einen Rmc [%] zwischen 1% und 12% hat, wobei der Blasformschritt geeignet ist, einen Behälter (20) bereitzustellen, der einen entsprechenden inneren Bereich (20a) hat, bereitgestellt ausgehend von der ersten inneren Oberfläche (12a) des Vorformlingskörpers (12), die einen Rmc [%] zwischen 3% und 30% hat.

2. Das Verfahren gemäß Anspruch 1, **dadurch gekennzeichnet, dass** die erste innere Oberfläche (12a) einen Rmc [%] zwischen 1% und 10% hat, wobei der Blasformschritt geeignet ist, einen Behälter (20) bereitzustellen, dessen entsprechender innerer Bereich (20a) bereitgestellt ist ausgehend von der ersten inneren Oberfläche (12a) des Vorformlingskörpers (12), die einen Rmc [%] zwischen 4% und 28% hat.

3. Das Verfahren gemäß einem oder mehreren der obigen Ansprüche, **dadurch gekennzeichnet, dass** der Rmc [%] berechnet wird wie in der ISO 21920-2:2021-Norm definiert.

4. Das Verfahren gemäß einem oder mehreren der obigen Ansprüche, **dadurch gekennzeichnet, dass** der gewellte Abschnitt konstruiert ist, um eine erste innere Oberfläche (12a) des Vorformlingskörpers (12) bereitzustellen, mindestens gleich 50% der Oberfläche der Seitenwand des Vorformlingskörpers (12).

5. Das Verfahren gemäß einem oder mehreren der obigen Ansprüche, **dadurch gekennzeichnet, dass** der gewellte Abschnitt hergestellt wird durch Sandstrahlen des Patrizenteils.

6. Das Verfahren gemäß einem oder mehreren der obigen Ansprüche, **dadurch gekennzeichnet, dass** es einen Schritt des Stapelns der Behälter (20) ineinander umfasst, ausgerichtet mit ihren jeweiligen Öffnungen (11) nach oben gerichtet.

7. Eine Vorrichtung zur Herstellung von Behältern (20), die eine Form zum Formen eines im Wesentlichen zylindrischen Vorformlings (10) umfasst, der eine Öffnung (11) und einen Vorformlingskörper (12) umfasst, welcher eine Seitenwand und einen Boden umfasst, wobei die Form einen Matrizenteil und einen Patrizenteil umfasst; und eine Vorrichtung zum Blasformen des Vorformlings (10), um einen Behälter (20) bereitzustellen; **dadurch gekennzeichnet, dass** der Patrizenteil mit mindestens einem gewellten Abschnitt ausgestattet ist, der dazu dient, die innere Oberfläche (12a) des Vorformlingskörpers (12) bereitzustellen, angeordnet in der Nähe der Öffnung (11); wobei der gewellte Abschnitt konstruiert ist, um eine erste innere Oberfläche (12a) des Vorformlingskörpers (12) bereitzustellen, die mindestens gleich 30% der Oberfläche der Seitenwand des Vorformlingskörpers (12) beträgt; wobei die erste innere Oberfläche (12a) einen Rmc [%] zwischen 1% und 12% hat, wobei der Blasformschritt geeignet ist, einen Behälter (20) bereitzustellen, dessen entsprechender innerer Bereich (20a) bereitgestellt ist ausgehend von der ersten inneren Oberfläche (12a) des Vorformlingskörpers (12), die einen Rmc [%] zwischen 3% und 30% hat.

8. Die Vorrichtung zur Herstellung von Behältern (20) gemäß Anspruch 7, **dadurch gekennzeichnet, dass** der gewellte Abschnitt dazu dient, eine erste innere Oberfläche (12a) des Vorformlingskörpers (12) bereitzustellen, die mindestens gleich 50% der Oberfläche der Seitenwand des Vorformlingskörpers (12) beträgt.

9. Die Vorrichtung zur Herstellung von Behältern (20) gemäß einem oder mehreren der Ansprüche 7 bis 8, **dadurch gekennzeichnet, dass** der gewellte Abschnitt durch Sandstrahlen des Patrizenteils hergestellt wird.

10. Ein Behälter (20), **dadurch gekennzeichnet, dass** er mit einem Verfahren gemäß einem oder mehreren der Ansprüche 1 bis 6 hergestellt wird.

## Revendications

1. Procédé de fabrication de récipients (20) comprenant une étape consistant à mouler une préforme sensiblement cylindrique (10) comportant une ouverture (11) et un corps de préforme (12) comprenant une paroi latérale et un fond, au moyen d'un moule comprenant une partie de moule femelle et une partie de moule mâle, et une étape consistant à mouler par soufflage ladite préforme (10) pour obtenir un récipient (20), **caractérisé en ce que** ladite partie mâle du moule est pourvue d'au moins une partie ondulée destinée à former la surface interne (12a) du corps de préforme (12) située à proximité de l'ouverture (11), ladite partie ondulée étant conçue pour former une première surface interne (12a) du corps de préforme (12) qui soit au moins égale à 30 % d'une surface d'une paroi latérale dudit corps de préforme (12), ladite première surface interne (12a) présentant un Rmc [%] compris entre 1 % et 12 %, ladite étape de moulage par soufflage étant adaptée pour former un récipient (20) comportant une région interne respective (20a) formée à partir de ladite première surface interne (12a) dudit corps de préforme (12) laquelle présente un Rmc [%] compris entre 3 % et 30 %.

2. Procédé selon la revendication 1, **caractérisé en ce que** ladite première surface interne (12a) présente un Rmc [%] compris entre 1 % et 10 %, ladite étape de moulage par soufflage étant adaptée pour fournir un récipient (20) comportant la règion interne respective (20a) formée à partir de ladite première surface interne (12a) dudit corps de préforme (12) et présentant un Rmc [%] compris entre 4 % et 28 %.

3. Procédé selon une ou plusieurs des revendications précédentes, **caractérisé en ce que** ledit Rmc [%] est calculé conformément à la norme ISO 21920-2:2021.

4. Procédé selon l'une ou plusieurs des revendications précédentes, **caractérisé en ce que** ladite partie ondulée est conçue pour fournir une première surface interne (12a) du corps de préforme (12) au moins égale à 50 % de la surface de la paroi latérale dudit corps de préforme (12).

5. Procédé selon une ou plusieurs des revendications précédentes, **caractérisé en ce que** ladite partie ondulée est obtenue par sablage de ladite partie mâle du moule.

6. Procédé selon une ou plusieurs des revendications précédentes, **caractérisé en ce qu'**il comprend une étape consistant à empiler lesdits récipients (20) les uns à l'intérieur des autres, orientés avec leurs ouvertures respectives (11) dirigées vers le haut.

7. Dispositif pour la fabrication de récipients (20), comprenant un moule destiné à mouler une préforme (10) sensiblement cylindrique comportant une ouverture (11) et un corps de préforme (12) comportant une paroi latérale et un fond, ledit moule comprenant une partie de moule femelle et une partie de moule mâle, et un dispositif destiné au moulage par soufflage de ladite préforme (10) pour obtenir un récipient (20), **caractérisé en ce que** ladite partie mâle du moule est pourvue d'au moins une partie ondulée destinée à former la surface interne (12a) du corps de préforme (12) située à proximité de l'ouverture (11), ladite partie ondulée étant conçue pour former une première surface interne (12a) du corps de préforme (12) qui soit au moins égale à 30 % de la surface de la paroi latérale dudit corps de préforme (12), ladite première surface interne (12a) présentant un Rmc [%] compris entre 1 % et 12 %, ladite étape de moulage par soufflage étant adaptée pour former un récipient (20) comportant la région interne respective (20a) formée à partir de ladite première surface interne (12a) dudit corps de préforme (12) présentant un Rmc [%] compris entre 3 % et 30 %.

8. Appareil de production de récipients (20) selon la revendication 7, **caractérisé en ce que** ladite partie ondulée est conçue pour former une première surface interne (12a) du corps de préforme (12) qui est au moins égale à 50 % de la surface de la paroi latérale dudit corps de préforme (12).

9. Appareil de production de récipients (20) selon l'une ou plusieurs des revendications 7 à 8, **caractérisé en ce que** ladite partie ondulée est obtenue par sablage de ladite partie mâle du moule.

10. Récipient (20), **caractérisé en ce qu'**il est fabriqué au moyen d'un procédé selon l'une ou plusieurs des revendications 1 à 6.
